# EUROPEAN PATENT APPLICATION

(11) **EP 1 843 237 A2**
(43) Date of publication of application: **10.10.2007**
(21) Application number: 07104311.1
(22) Date of filing: 16.03.2007
(51) Int. Cl.: G06F 1/32

(54) **Wake-up device and method for generating a control signal**

(30) Priority: 17.03.2006 WO PCT/SE2006/000345
(71) Applicant: Phoniro AB, 302 50 Halmstad (SE)
(72) Inventor: Bliding, Olle, 302 51, Halmstad (SE); Knutsson, Lars, 302 37, Halmstad (SE); Hörberg, Johan, 302 70, Halmstad (SE)
(74) Representative: Andersson, Björn E.

(57) **Abstract**

A wake-up device for generating a control signal is presented. The wake-up device (320) comprises a sensor (324) for detecting an input signal, and an electrical circuitry (322) for processing the detected input signal and generating said control signal (326). The wake-up device is characterised in that said input signal comprises at least one knock. Further, a method for generating a control signal from a wake-up device is also presented.

## Description

### Technical field

The present invention relates to a wake-up device for generating a control signal comprising a sensor for detecting an input signal, and an electrical circuitry for processing the detected input signal and generating said control signal. The present invention also relates to a method for generating a control signal from a wake-up device.

### Background of the invention

Wireless systems are today used in a vast amount of applications. Such systems can be utilized for continuous transfer of data as well as intermittent data transfer. Standards, like e.g. Bluetooth^{™}, have therefore been developed for enabling the implementation of such wireless systems.

Considering wireless systems in general, the overall power consumption can be derived from the actual transfer of data signals (e.g. an audio signal, a video signal or similar), and from the establishment of communication between the wireless system devices. In cases where the wireless system is used for intermittent data transfer, different solutions apply in order to reduce the power consumption due to establishment of communication between the devices. The devices may for instance comprise an internal clock and a computer program, allowing the communication to occur at different predetermined instants of time. If the internal clocks of the different wireless system devices are synchronized, one device will begin to "look" for data, and at the same time a corresponding device will begin to transmit data. In the time gap between the predetermined instants of time, the devices may be in a sleep-mode, thereby reducing the overall power consumption of the wireless system.

SE-0500616-8 discloses a method for unlocking a lock by a lock device enabled for short-range wireless data communication in compliance with a communication standard. The method further involves the introductory steps of detecting the presence of a user in a vicinity of said lock device and in response triggering performance of detecting a key device within operative range of the lock device. This allows the lock device to rest in a sleep mode with negligible power consumption during periods of inactivity. Only elements that handle the detection of the user's presence will need to be active during such a sleep mode. In turn, such optimum power preservation allows implementing the lock device as a stand-alone device that may operate autonomously for long periods of time, powered by its own power source such as batteries.

The presence of the user may be detected by receiving a detection signal from a proximity sensor positioned and adapted to monitor the vicinity of said lock device. The proximity sensor may be selected from the group consisting of: an IR (Infra-Red) sensor, an ultra-sound sensor, an optical sensor, an RF (Radio Frequency) sensor or a pressure sensor.

The above technique suffers from certain drawbacks. Firstly, such detection of the user's presence may induce several unintentional activations of the radio communication. Secondly, such proximity sensor requires an increased need of service and maintenance of the wireless system.

### Summary of the invention

In view of the above, an objective of the invention is to solve or at least reduce the problems discussed above.

A specific objective of the present invention is to provide a wake-up device that detects knocks.

This is generally achieved by the attached independent patent claims.

A first aspect of the invention is a wake-up device for generating a control signal comprising a sensor for detecting an input signal, and an electrical circuitry for processing the detected input signal and generating said control signal. The wake-up device is characterised in that said input signal comprises at least one knock. Thus, the wake-up device can be mounted inside existing housings, e.g. doors, and the number of unintentional activations is reduced.

The sensor may be an acoustic sensor or a vibration sensor, and more particularly a microphone or an accelerometer. This is advantageous in that equipment known per se can be used.

The electrical circuitry may be configured to detect at least one of the signal intensity, the number of knocks and the frequency distribution of the input signal, which is advantageous in that the knock may be distinguished from noise.

The electrical circuitry may comprise a filter for filtering the input signal, which is advantageous in that a knock may be even better distinguished from noise.

The filter may be a band pass filter, which is advantageous in that equipment known per se can be used.

The electrical circuitry may be configured to apply a predetermined criteria to the detected input signal for deciding whether or not the control signal should be generated. This is advantageous in that a complex or coded knock pattern may be used as input signal.

A second aspect of the present invention is a method for generating a control signal from a wake-up device. The method is characterised in detecting at least one knock as an input signal, processing the detected signal, and generating said control signal.

At least one of the signal intensity, the number of knocks and the frequency distribution of the input signal may be detected.

The detected input signal may further be filtered, preferably by means of a band pass filter.

A predetermined criteria to the detected input signal for deciding whether or not the control signal should be generated may be applied.

The advantages of the first aspect of the invention are also applicable for this second aspect of the invention.

Other objectives, features and advantages of the present invention will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. All references to "a knock" are to be interpreted openly as referring to at least one impact on a surface. Such impact may be performed by a human finger, fist, foot or other body part, any tool or object operated by a human, etc. The steps of any method disclosed herein do not have to be performed in the exact order disclosed, unless explicitly stated.

### Brief description of the drawings

The above, as well as additional objectives, features and advantages of the present invention, will be better understood through the following illustrative and non-limiting detailed description of embodiments of the present invention, with reference to the appended drawings, where the same reference numerals will be used for similar elements.

Fig 1 is a schematic illustration of a telecommunication system, including a wireless key device implemented by a mobile terminal, an embodiment of a wireless lock device for a lock in a door, a wireless administrator device implemented by a mobile terminal, an administrator server, a mobile telecommunications network and a couple of other elements, as an example of an environment in which the present invention may be applied.

Fig 2 is a schematic front view illustrating the wireless key device of Fig 1, and in particular some external components that are part of a user interface towards a user of the wireless key device.

Fig 3 is a schematic block diagram illustrating internal components and modules, including one embodiment of the present invention, of the wireless lock device as shown in Fig 1.

Fig 4 is a schematic view of one embodiment of the present invention.

### Detailed description of embodiments

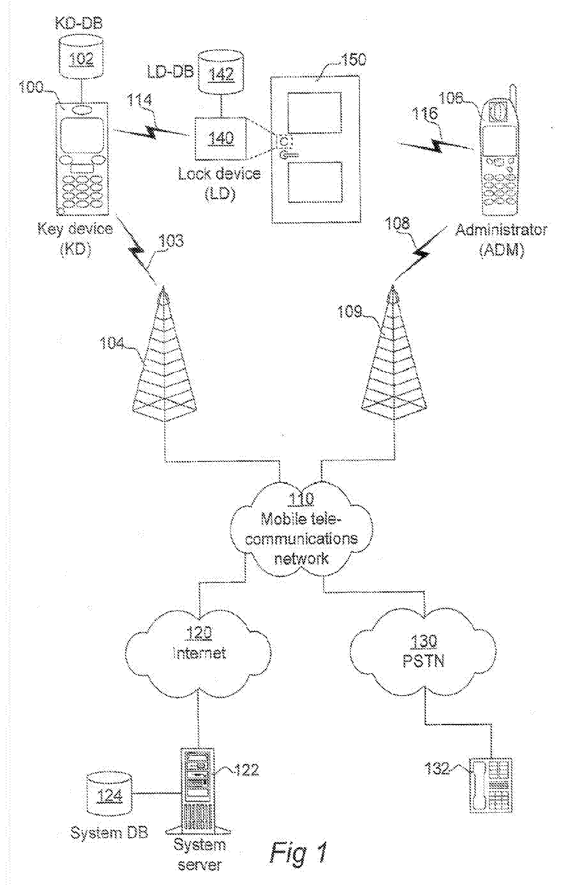

The present invention may advantageously be implemented in a mobile telecommunications system, one example of which is illustrated in Fig 1 and further described in SE-0500616-8. Central elements in Fig 1 are a wireless key device (KD) 100 and a wireless lock device (LD) 140. The purpose of the lock device 140 is to control some sort of lock mechanism in a lock, which in the illustrated example is a door lock on a door 150. In turn, the lock device 140 is operated by the key device when brought in the vicinity of the lock device. In more particular, both the key device 100 and the lock device 140 are enabled for short-range wireless data communication in compliance with a communication standard. In the preferred embodiment, this communication standard is Blue-tooth^{™}. Having been the de facto standard for short-range wireless data communication for mobile devices during several years already, Bluetooth^{™} is believed to be very well known to the skilled person, and no particulars about Bluetooth^{™} as such are consequently given herein.

As with most other contemporary mobile telecommunications systems, the system of Fig 1 provides various telecommunications services such as voice calls, data calls, facsimile transmissions, music transmissions, still image transmissions, video transmissions, electronic message transmissions and electronic commerce for mobile terminals in the system, such as aforementioned mobile terminal 100, another mobile terminal 106, personal digital assistants (PDA) or portable computers. It is to be noticed that these various telecommunications services are not central to the invention, and for different embodiments, different ones of the telecommunications services may or may not be available.

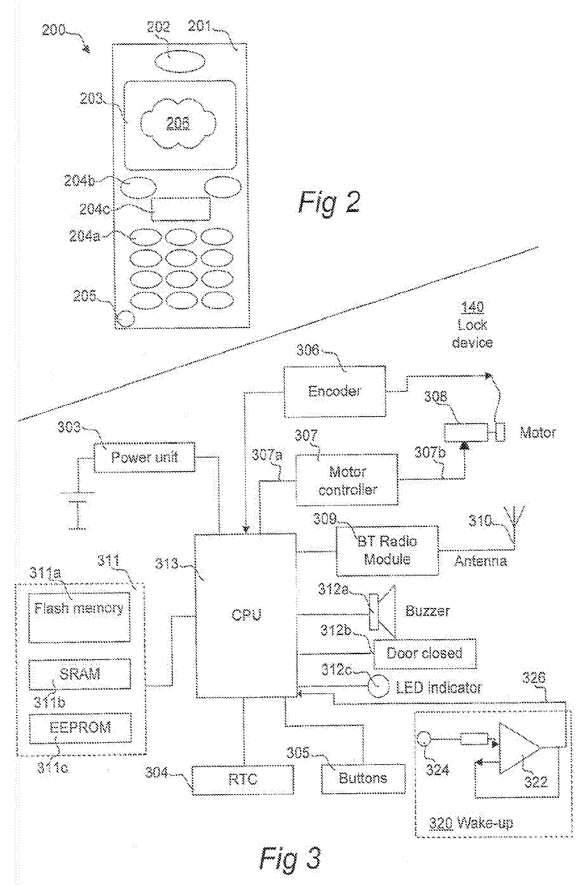

In Fig 1, the key device 100 is implemented by any commercially available, Bluetooth^{™}-enabled mobile terminal 100, one embodiment 200 of which is shown in Fig 2. As seen in Fig 2, and as is well known in the art, the mobile terminal 200 comprises an apparatus housing 201, a loudspeaker 202, a display 203, an input device 204a-c, and a microphone 205. In the disclosed embodiment, the input device 204a-c includes a set of keys 204a arranged in a keypad of common ITU-T type (alpha-numerical keypad), a pair of soft keys or function keys 204b, and a biometrical data reader 204c in the form of a fingerprint sensor. Hence, a graphical user interface 206 is provided, which may be used by a user of the mobile terminal 200 to control the terminal's functionality and get access to any of the telecommunications services referred to above, or to any other software application executing in the mobile terminal. The keypad 204a may be used for entering a PIN code to be used for authenticating the key device 100 in the lock device 140 in order to decide whether or not to unlock the lock controlled by the lock device. The biometrical data reader 204c may be used correspondingly to produce a digital fingerprint sample from the user, said fingerprint sample being used for authenticating the key device 100 in the lock device 140 by matching with prestored fingerprint templates.

In addition, but not shown in Fig 2, the mobile terminal 200 of course comprises various internal hardware and software components, such as a main controller (implemented e.g. by any commercially available Central Processing Unit (CPU), Digital Signal Processor (DSP) or any other electronic programmable logic device); associated memory, such as RAM memory, ROM memory, EEPROM memory, flash memory, hard disk, or any combination thereof; various software stored in the memory, such as a real-time operating system, a man-machine or user interface, device drivers, and one or more various software applications, such as a telephone call application, a contacts application, a messaging application, a calendar application, a control panel application, a camera application, a mediaplayer, a video game, a notepad application, etc; various I/O devices other than the ones shown in Fig 2, such as a vibrator, a ringtone generator, an LED indicator, volume controls, etc; an RF interface including an internal or external antenna as well as appropriate radio circuitry for establishing and maintaining an RF link to a base station; aforementioned Bluetooth^{™} interface including a Bluetooth^{™} transceiver; other wireless interfaces such as WLAN, HomeRF or IrDA.; and a SIM card with an associated reader.

The mobile terminals 100, 106 are connected to a mobile telecommunications network 110 through RF links 103, 108 via base stations 104, 109. The mobile telecommunications network 110 may be in compliance with any commercially available mobile telecommunications standard, such as GSM, UMTS, D-AMPS or CDMA2000.

The mobile telecommunications network 110 is operatively connected to a wide area network 120, which may be Internet or a part thereof. Various client computers and server computers, including a system server 122, may be connected to the wide area network 120.

A public switched telephone network (PSTN) 130 is connected to the mobile telecommunications network 110 in a familiar manner. Various telephone terminals, including a stationary telephone 132, may be connected to the PSTN 130.

The lock device 140 is a stand-alone, autonomously operating device which requires no wire-based installations, neither for communication nor for power supply. Instead, the lock device 140 is powered solely by a local battery power unit 303 and interacts with the key device, as already mentioned, by Bluetooth^{™}-based activities. To this end, the lock device 140 has a Bluetooth^{™} radio module 309 with an antenna 310.

The lock device 140 of the present embodiment further includes a real-time clock 304 capable of providing the CPU 313 which an accurate value of the current time. A detector 312b may be positioned to detect that the door 150 is in a properly closed position, so that the CPU 313 may command locking of the lock 160 a certain time after a user has opened the door through the key device 100 and passed therethrough. The detector 312b may be a conventional magnetic switch having a small magnet mounted to the door frame and a magnetic sensor mounted at a corresponding position on the door leaf.

The lock device 140 may have a simple user interface involving button(s) 305, a buzzer 312a and LED indicator(s) 312c. In some embodiments, an authorized administrator (ADM) may configure the lock device 140 through this user interface. In other embodiments, though, configuration of the lock device 140 - including updating the contents of a local database (LD-DB) 142 stored in memory 311 and containing i.a. key device authentication data - occurs wirelessly either directly from a proximate mobile terminal 106 over a Bluetooth^{™} link 116, or by supplying a key device, for instance key device 100, with authentication data updating information from a system database 124 at the system server 122 over the mobile telecommunications network 110.

Since the lock device 140 is a stand-alone, battery-powered installation which is intended to be operative for long time periods without maintenance, it is important to keep power consumption at a minimum. Therefore, the present system is designed to put itself in a sleep mode after a certain period of inactivity. In the sleep mode, the elements of the lock device 140 are inactive and consume negligible power. The way to exit the sleep mode and enter operational mode is by applying a wake-up control signal 326 on a particular control input on the CPU 313. To this end, the lock device 140 is provided with a wake-up arrangement 320 according to one embodiment of the present invention.

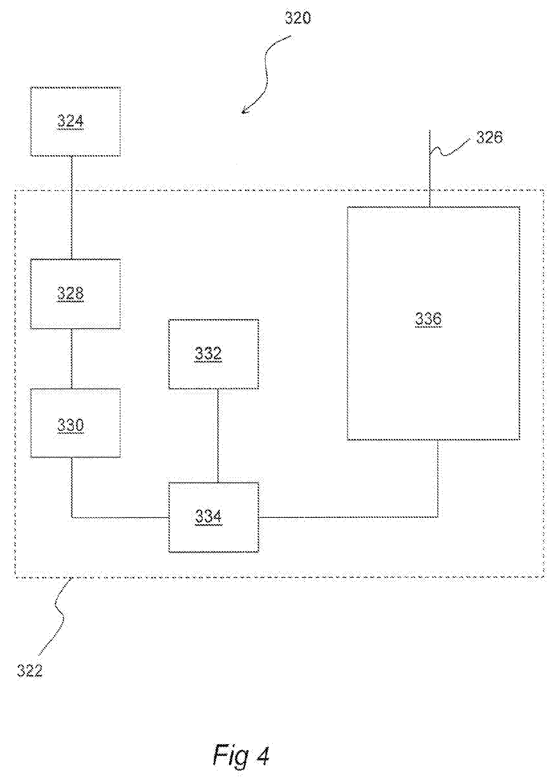

In fig 4, one embodiment of the present invention is shown. The wake-up arrangement 320 has a sensor such as an acoustic or vibration sensor 324 which may be adapted to detect knocks on a door leaf. Such a sensor may be provided in the form of a microphone which may be attached via a spacer to the door leaf. The spacer will then transfer vibrations caused by door knocks to the microphone. The circuitry 322 may be programmed or designed to apply predetermined wake-up criteria when decided whether or not to generate the wake-up control signal 326. Such wake-up criteria may for instance be related to the intensity of the knock(s), the number of knocks, and/or the frequency distribution or rhythm of the knocks. Thus, the wake-up criteria may be the detection of more than one door knock within a certain time frame. This may prevent an accidental wake-up because of a spurious detection of a non-related sound from the environment. Even more advanced wake-up criteria may be used, such as a given sequence of short and long door knocks, much like a code of Morse signals.

In more detail, the electric circuitry 322 may comprise an amplifier 328, a filter 330, a comparator 334 for comparing the filtered signal with an intensity reference level 332, and a processor 336.

The signal detected by the sensor 324 is thus amplified by the amplifier 328, and thereafter filtered by the filter 330. The filter 330 may preferably be a band pass filter of any type known per se. The amplified and filtered signal is compared to the reference level 332 by a common comparator 334, in order to reduce the number of unintentional wake-up operations. If the filtered signal exceeds the reference level 332, the signal is further processed by the processor 336.

The processing step may include several partial steps, depending on the level of processing. The processor 336 may be programmed to determine the intensity of the signal. It may further be programmed to determine the number of knocks in the signal, as well as it may be programmed to determine the frequency distribution of the signal. By determining such frequency distribution, the "rhythm" of a number of knocks may be determined.

Further, the processor 336 may be configured to apply a predetermined criteria to the detected input signal for deciding whether or not the control signal should be generated. Such criteria may be fulfilled if the signal intensity exceeds a certain pre-programmed value. Such criteria may also be fulfilled if the number of knocks equals a certain pre-programmed value of number of knocks. Further, such criteria may also be fulfilled if the frequency distribution or "rhythm" of the number of knocks in the input signal corresponds to a pre-programmed "rhythm".

If the detected input signal fulfils the predetermined criteria, a control signal 326 may be generated. The control signal may be configured to turn an electronic system from sleep mode to operation mode.

Another system in which the present invention may be implemented will now be described. A wake-up device according to the present invention may be arranged in a door or a window on a house which is subject to surveillance by e.g. security officers. By knocking on the door or window, the wake-up device according to the present invention decides whether or not a control signal should be generated. If a control signal is generated, a radio communication is established between a key device carried by the security officer, and a stationary device positioned inside the building. Provided that the key device matches the stationary device, the radio communication will ensure that the presence of the security officer is logged.

The wake-up device according to the present invention may further comprise an internal memory circuit being connected to a locally stored database. The database may contain information about different knock patterns, and identification data corresponding to each knock pattern. The wake-up device may thereby, together with the control signal, also generate a signal comprising information about the detected pattern and hence user information corresponding to the detected pattern. For the surveillance system described above, each security officer may have a unique knock pattern. Even if the security officers share the same key device, the wake-up device according to the present information will send information about the user to the surveillance system.

The invention has mainly been described above with reference to a few presently preferred embodiments. However, as is readily appreciated by a person skilled in the art, other embodiments than the ones disclosed above are equally possible within the scope of the invention, as defined by the appended patent claims. The invention may for instance just as well be used for controlling other kind of objects than described above, including but not limited to garage ports and various other equipment at homes, offices or public buildings. The present invention may be implemented in a medicine cabinet, as well as safety locks etc.

## Claims

1. A wake-up device for generating a control signal comprising
a sensor (324) for detecting an input signal, and
an electrical circuitry (322) for processing the detected input signal and generating said control signal (326), **characterised in that**
said input signal comprises at least one knock.

2. A wake-up device according to claim 1, wherein said sensor (324) is an acoustic sensor or a vibration sensor.

3. A wake-up device according to claim 2, wherein said sensor (324) is a microphone or an accelerometer.

4. A wake-up device according to any one of claims 1-3, wherein said electrical circuitry (322) is configured to detect at least one of the signal intensity, the number of knocks and the frequency distribution of the input signal.

5. A wake-up device according to any one of claims 1-4, wherein said electrical circuitry (322) comprises a filter (330) for filtering the input signal.

6. A wake-up device according to claim 5, wherein said filter (330) is a band pass filter.

7. A wake-up device according to any one of claims 1-6, wherein said electrical circuitry (322) is configured to apply a predetermined criteria to the detected input signal for deciding whether or not the control signal (326) should be generated.

8. A method for generating a control signal from a wake-up device, **characterised in**
detecting at least one knock as an input signal,
processing the detected signal, and
generating said control signal.

9. A method according to claim 8, further comprising detecting at least one of the signal intensity, the number of knocks and the frequency distribution of the input signal.

10. A method according to any one of claims 8 or 9, further comprising filtering the detected input signal.

11. A method according to claim 10, further comprising filtering the detected input signal by means of a band pass filter.

12. A method according to any one of claims 8-11, further comprising applying a predetermined criteria to the detected input signal for deciding whether or not the control signal should be generated.
